# EUROPÄISCHE PATENTANMELDUNG

(11) **EP 3 730 250 A1**
(43) Veröffentlichungstag der Anmeldung: **28.10.2020**
(21) Anmeldenummer: 19170854.4
(22) Anmeldetag: 24.04.2019
(51) Int. Cl.: B25F 5/00, B25H 3/02

(54) **VERFAHREN ZUR GEFAHRENABSCHALTUNG VON HANDGEFÜHRTEN WERKZEUGEN UND HANDGEFÜHRTES WERKZEUG**

(71) Anmelder: Adolf Würth GmbH & Co. KG, 74653 Künzelsau (DE)
(72) Erfinder: Marquette, Adrien, 74523 Schwäbisch Hall (DE)
(74) Vertreter: Patentanwälte Ruff, Wilhelm, Beier, Dauster & Partner mbB

(57) **Zusammenfassung**

Die Erfindung betrifft ein Verfahren zur Gefahrenabschaltung von handgeführten Werkzeugen (10) mit Antrieb, wobei das handgeführte Werkzeug (10) mit wenigstens einer Kamera (20) mechanisch verbunden ist und die Kamera (20) und/oder das Werkzeug (10) mit einer Auswerteeinheit (32) mit einer Bildverarbeitungssoftware versehen ist, bei dem die Schritte Aktivieren der Kamera (20), Erfassen eines vordefinierten Gefahrenbereichs (24) des handgeführten Werkzeugs (10) mittels der Kamera (20), Verarbeiten und Auswerten der erfassten Bilddaten mittels der Auswerteeinheit (32) und der Bildverarbeitungssoftware hinsichtlich des Vorhandenseins eines menschlichen Körperteils in dem Gefahrenbereich und Erzeugen eines Warnsignals, Verlangsamen des Antriebs des handgeführten Werkzeugs und/oder Stoppen des Antriebs des handgeführten Werkzeugs beim Vorhandensein eines menschlichen Körperteils im Gefahrenbereich vorgesehen sind.

## Beschreibung

Die Erfindung betrifft ein Verfahren zur Gefahrenabschaltung von handgeführten Werkzeugen mit einem Antrieb, wobei das handgeführte Werkzeug mit wenigstens einer Kamera insbesondere mechanisch verbunden ist und die Kamera und/oder das Werkzeug mit einer Auswerteeinheit mit einer Bildverarbeitungssoftware versehen ist. Die Erfindung betrifft auch ein handgeführtes Werkzeug mit einem motorischen Antrieb.

Mit der Erfindung soll die Sicherheit von handgeführten Werkzeugen mit motorischem Antrieb verbessert werden.

Erfindungsgemäß ist hierzu ein Verfahren zur Gefahrenabschaltung von handgeführten Werkzeugen mit einem Antrieb vorgesehen, wobei das handgeführte Werkzeug mit wenigstens einer Kamera insbesondere mechanisch verbunden ist und die Kamera und/oder das Werkzeug mit einer Auswerteeinheit mit einer Bildverarbeitungssoftware versehen ist, mit den Schritten Aktivieren der Kamera, Erfassen eines vordefinierten Gefahrenbereichs des handgeführten Werkzeugs mittels der Kamera, Verarbeiten und Auswerten der erfassten Bilddaten mittels der Auswerteeinheit und der Bildverarbeitungssoftware hinsichtlich des Vorhandenseines eines menschlichen Körperteils in dem Gefahrenbereich sowie Erzeugen eines Warnsignals und/oder Verlangsamen des Antriebs des handgeführten Werkzeugs und/oder Abschalten des Antriebs des handgeführten Werkzeugs beim Vorhandensein eines menschlichen Körperteils im Gefahrenbereich.

Mit der Erfindung wird es ermöglicht, auch bei handgeführten Werkzeugen eine sehr große Arbeitssicherheit sicherzustellen. Während bei Maschinen, beispielsweise Stanzen, um Bleche zu lochen oder umzuformen, aus Sicherheitsgründen zwei Betätigungsknöpfe vorhanden sind, die gleichzeitig gedrückt und gehalten werden müssen, um das Stanzen oder Umformen auszulösen, sind entsprechende Sicherheitseinrichtungen bei handgeführten Werkzeugen nicht bekannt. Es ist bei der Benutzung von handgeführten Werkzeugen nicht unüblich, dass das handgeführte Werkzeug, beispielsweise ein Einhand-Winkelschleifer oder eine Bohrmaschine, mit einer Hand gehalten wird und mit der anderen Hand das zu bearbeitende Werkstück gehalten oder geführt wird. Mit der Erfindung kann nun erkannt werden, ob sich ein menschliches Körperteil in einen Gefahrenbereich des handgeführten Werkzeugs hineinbewegt. Ist dies der Fall, kann, beispielsweise auch in Abhängigkeit weiterer Parameter, entweder nur ein Warnsignal ausgegeben werden, der Antrieb des handgeführten Werkzeugs kann verlangsamt oder heruntergefahren werden und/oder der Antrieb des handgeführten Werkzeugs kann vollständig abgeschaltet werden. Auch bei handgeführten Werkzeugen kann dadurch eine sehr große Arbeitssicherheit sichergestellt werden. Als handgeführte Werkzeuge mit Antrieb werden im Rahmen der Erfindung beispielsweise elektrisch, pneumatisch, hydraulisch oder auch mit Verbrennungsmotor angetriebene Werkzeuge bezeichnet, insbesondere Bohrmaschinen, Schrauben, Schleifgeräte, Sägen, Heißluftgeräte, auch mit Flamme, Motorsägen und dergleichen. Eine Überwachung des Gefahrenbereichs kann auch nach dem Abschalten des Antriebs erfolgen, beispielsweise bis ein Werkzeugeinsatz abgekühlt ist oder bis ein scharfkantiger Werkzeugeinsatz entfernt oder abgedeckt ist.

In Weiterbildung der Erfindung ist das Erfassen und Verarbeiten von Signalen wenigstens eines weiteren Sensors an oder in dem handgeführten Werkzeug mittels der Auswerteeinheit vorgesehen und es ist weiter das Berücksichtigen der Signale des wenigstens einen weiteren Sensors beim Auswerten der erfassten Bilddaten hinsichtlich des Vorhandenseins eines menschlichen Körperteils in dem Gefahrenbereich vorgesehen.

Mittels weiterer Sensoren kann die Verlässlichkeit des Erkennens eines menschlichen Körperteils mittels der wenigstens einen Kamera erhöht werden. Dies gilt vor allem dann, wenn mit Handschuhen gearbeitet wird. Mittels eines weiteren Sensors kann dann ein zusätzlicher Messwert erzeugt werden, der auf das Vorhandensein eines menschlichen Körperteils hindeutet.

Als weiterer Sensor kann beispielsweise ein Infrarotsensor, ein mit hochfrequenter elektromagnetischer Strahlung arbeitender Sensor, ein Ultraschallsensor, ein Temperatursensor und/oder ein Positionssensor zum Erfassen einer Position des handgeführten Werkzeugs im Raum eingesetzt werden.

In Weiterbildung der Erfindung ist das Erfassen des Gefahrenbereichs mittels wenigstens zwei mit unterschiedlichem Blickwinkel auf den Gefahrenbereich angeordneten Kameras, insbesondere 3-D-Kameras, und das Verarbeiten und Auswerten der Daten der wenigstens zwei Kameras mittels der Auswerteeinheit und der Bildverarbeitungssoftware vorgesehen.

Indem wenigstens zwei Kameras vorgesehen sind, kann beispielsweise verhindert werden, dass ein Abschnitt des Gefahrenbereichs durch ein Gehäuse des handgeführten Werkzeugs verdeckt ist. Darüber hinaus können auch räumliche Bilddaten erstellt werden, um den Gefahrenbereich auch in seiner dreidimensionalen Ausdehnung zuverlässig und korrekt erfassen zu können.

In Weiterbildung der Erfindung ist das Aktivieren der Kamera mittels Bewegen des handgeführten Werkzeugs und/oder Einschalten des Antriebs des handgeführten Werkzeugs vorgesehen.

Bei stillstehendem Antrieb ist es in der Regel erforderlich, dass ein Bediener in den Gefahrenbereich eingreift, beispielsweise um einen Werkzeugeinsatz zu wechseln. Wird der Antrieb dann eingeschaltet, muss der Gefahrenbereich aber überwacht werden.

In Weiterbildung der Erfindung ist das Aktivieren der Kamera mittels Ausklappen der Kamera vorgesehen.

Die Kamera kann klappbar am Gehäuse des handgeführten Werkzeugs angeordnet sein, um beispielsweise während eines Transports der Kamera geschützt untergebracht zu sein. Durch einfaches Ausklappen der Kamera oder mehrerer Kameras aus dem Gehäuse können diese dann aktiviert werden und der Gefahrenbereich kann überwacht werden.

In Weiterbildung der Erfindung kann das Definieren eines Gefahrenbereichs entweder in Form einer gedachten Kugel, in deren Zentrum insbesondere ein Werkzeugeinsatz des handgeführten Werkzeugs angeordnet ist, oder in Form eines gedachten Zylinders, auf dessen Mittellängsachse insbesondere ein Werkzeugeinsatz des handgeführten Werkzeugs angeordnet ist, erfolgen.

Die Form des Gefahrenbereichs kann beispielsweise auch je nach Art des verwendeten Werkzeugeinsatzes gewechselt werden. Wird ein Bohrer als Werkzeugeinsatz verwendet, ist ein zylindrischer Gefahrenbereich sinnvoll, der sich ausgehend von dem Ende des Bohrers noch ein Stück weit in die vorgesehene Bohrrichtung erstreckt. Wird als Werkzeugeinsatz beispielsweise eine Schleifscheibe oder ein Fräser eingesetzt, ist ein kugelförmiger Gefahrenbereich sinnvoll. Bei einem Heißluftgebläse ist kein Werkzeugeinsatz vorhanden, der Gefahrenbereich wird dort so gewählt, dass eine Mittellängsachse des Heilluftstroms die Mittellängsachse des zylindrischen Gefahrenbereichs definiert.

In Weiterbildung der Erfindung ist das Unterteilen des Gefahrenbereichs in einen inneren Gefahrenbereich und einen äußeren Gefahrenbereich vorgesehen und es ist das Erzeugen eines Warnsignals und/oder das Verlangsamen des Antriebs beim Vorhandensein eines menschlichen Körperteils in dem äußeren Gefahrenbereich vorgesehen und es ist das Abschalten des Antriebs des handgeführten Werkzeugs beim Vorhandensein eines menschlichen Körperteils in dem inneren Gefahrenbereich vorgesehen.

Durch Unterteilen des Gefahrenbereichs in mehrere Abschnitte, wobei im Rahmen der Erfindung auch mehr als zwei Abschnitte des Gefahrenbereichs vorgesehen sein können, kann eine Handhabung des handgeführten Werkzeugs deutlich verbessert werden. Bewegt sich beispielsweise eine Hand des Bedieners lediglich in den ersten, äußeren Gefahrenbereich, wird nur ein Warnsignal ausgegeben und der Bediener hat dadurch Gelegenheit, seine Hand aus dem Gefahrenbereich zurückzuziehen. Er muss den gerade laufenden Arbeitsschritt aber nicht abbrechen, da der Antrieb des handgeführten Werkzeugs noch nicht gestoppt wird. Erst dann, wenn ein menschliches Körperteil in den zweiten, inneren Gefahrenbereich bewegt wird, wird der Antrieb des handgeführten Werkzeugs bzw. eine Bewegung eines Werkzeugeinsatzes des handgeführten Werkzeugs sofort gestoppt, so dass von dem Werkzeugeinsatz keine Verletzungsgefahr mehr ausgeht.

In Weiterbildung der Erfindung ist das Erstellen einer Dokumentation von mit dem handgeführten Werkzeug durchgeführten Arbeitsschritten anhand der mittels der wenigstens einen Kamera erfassten Bilddaten vorgesehen.

In sehr einfacher Weise können dadurch vorgenommene Arbeitsschritte dokumentiert werden.

In Weiterbildung der Erfindung ist beim Erstellen einer Dokumentation das Berücksichtigen von Daten wenigstens eines weiteren Sensors vorgesehen, insbesondere eines Positionssensors zum Erfassen einer Position des handgeführten Werkzeugs im Raum, und es ist das Berücksichtigen von Daten des handgeführten Werkzeugs vorgesehen, insbesondere Gerätenummer, Drehzahl, Drehmoment, Art und Abmessung eines Werkzeugeinsatzes des handgeführten Werkzeugs, und/oder es ist das Berücksichtigen von Daten eines Bedieners des handgeführten Werkzeugs beim Erstellen der Dokumentation vorgesehen.

Die der Erfindung zugrunde liegende Aufgabe wird auch durch ein handgeführtes Werkzeug mit einem Antrieb gelöst, bei dem wenigstens eine insbesondere mechanisch mit dem handgeführten Werkzeug verbundene Kamera zum Erfassen eines vordefinierten Gefahrenbereichs des handgeführten Werkzeugs, eine Auswerteeinheit mit einer Bildverarbeitungssoftware zum Verarbeiten und Auswerten der erfassten Bilddaten mittels der Auswerteeinheit und der Bildverarbeitungssoftware hinsichtlich des Vorhandenseines eines menschlichen Körperteils in den Gefahrenbereich und eine Steuereinheit zum Erzeugen eines Warnsignals und/oder zum Verlangsamen eines Antriebs des handgeführten Werkzeugs und/oder zum Stoppen des Antriebs des handgeführten Werkzeugs beim Vorhandensein eines menschlichen Körperteils im Gefahrenbereich vorgesehen. Die Bildverarbeitungssoftware ist eine Software, in die beispielsweise ein Bild oder eine Bilderfolge oder ein Live-Bild oder ein Video eingegeben wird, die das Bild oder die Bilderfolge oder das Live-Bild oder das Video dann verarbeitet und die eine daraus abgeleitete Information ausgibt. Für eine Eingabe der Bildverarbeitungssoftware kann als Bild oder Bilderfolge oder Live-Bild oder Video ein optisches Bild, ein IR-Bild, ein UV-Bild oder eine Punktwolke in Betracht kommen. Für eine Verarbeitung mittels der Bildverarbeitungssoftware kann die Bildverarbeitungssoftware ein neuronales Netz sein und/oder auf künstlicher Intelligenz basiert arbeiten. Für eine Ausgabe der Bildverarbeitungssoftware können Steuersignale für das handgeführte Werkzeug vorgesehen sein, beispielsweise Erzeugen des Warnsignals und/oder Verlangsamen des Antriebs des handgeführten Werkzeugs und/oder Stoppen des Antriebs des handgeführten Werkzeugs aufgrund eines menschlichen Körperteils im Gefahrenbereich.

In Weiterbildung der Erfindung weist das handgeführte Werkzeug wenigstens einen weiteren Sensor, insbesondere einen Infrarotsensor, einen mit hochfrequenter elektromagnetischer Strahlung arbeitenden Sensor, einen Ultraschallsensor und/oder einen Positionssensor zum Erfassen einer Position des handgeführten Werkzeugs im Raum auf und das handgeführte Werkzeug weist Mittel zum Weiterleiten der Signale des wenigstens einen weiteren Sensors zu der Auswerteeinheit auf.

In Weiterbildung der Erfindung sind ein Speicher zum Speichern von Daten und eine Schnittstelle zum Auslesen von Daten vorgesehen.

Gemäß der Erfindung ist eine Anordnung mit einem handgeführten Werkzeug und zumindest einer separaten Kamera vorgesehen, wobei zwischen dem handgeführten Werkzeug und der zumindest einen separaten Kamera eine Kommunikationsverbindung besteht und die zumindest eine separate Kamera einen Gefahrenbereich des handgeführten Werkzeugs überwacht.

Neben der zumindest einen separaten Kamera kann auch die Auswerteeinheit und/oder die Steuereinheit separat und somit nicht als Teil des handgeführten Werkzeugs ausgeführt sein. Durch die Kommunikationsverbindung zwischen der zumindest einen separaten Kamera, der Auswerteeinheit, der Steuereinheit und dem handgeführten Werkzeug kann das handgeführte Werkzeug im Falle eines Eindringens eines menschlichen Körperteils in den Gefahrenbereich des handgeführten Werkzeugs das Warnsignal erzeugen und/oder den Antrieb des handgeführten Werkzeugs verlangsamen und/oder den Antrieb des handgeführten Werkzeugs stoppen.

In Weiterbildung der Erfindung ist ein Koffer für das handgeführte Werkzeug vorgesehen, in dem die zumindest eine separate Kamera angeordnet ist, wobei der Koffer so positioniert ist, dass der Gefahrenbereich des handgeführten Werkzeugs überwachbar ist. In dem Koffer, insbesondere in einem Deckel des Koffers, kann die Auswerteeinheit und/oder die Steuereinheit angeordnet sein. Der Deckel kann bevorzugt klappbar ausgebildet sein und in einem Neigungswinkel einstellbar sein. Dann lässt sich der Koffer so positionieren, dass die zumindest eine separate Kamera so ausgerichtet ist, dass mittels des handgeführten Werkzeugs durchzuführende Arbeitsschritte erfassbar sind und ein Gefahrenbereich des handgeführten Werkzeugs überwachbar ist.

Weitere Merkmale und Vorteile der Erfindung ergeben sich aus den Ansprüchen und der folgenden Beschreibung bevorzugter Ausführungsformen der Erfindung im Zusammenhang mit den Zeichnungen. Einzelmerkmale der unterschiedlichen, dargestellten und beschriebenen Ausführungsformen lassen sich dabei in beliebiger Weise miteinander kombinieren, ohne den Rahmen der Erfindung zu überschreiten. Dies gilt auch für die Kombination von Einzelmerkmalen ohne weitere Einzelmerkmale, mit denen sie im Zusammenhang beschrieben sind. In den Zeichnungen zeigen:
- Fig. 1: eine schematische Darstellung einer erfindungsgemäßen Handbohrmaschine in einer Seitenansicht,
- Fig. 2: die Handbohrmaschine der Fig. 1 in einer schematischen Vorderansicht,
- Fig. 3: eine schematische Seitenansicht eines erfindungsgemäßen Einhand- Winkelschleifers und
- Fig. 4: eine schematische Darstellung eines Koffers für ein erfindungsgemäßes handgeführtes Werkzeug.

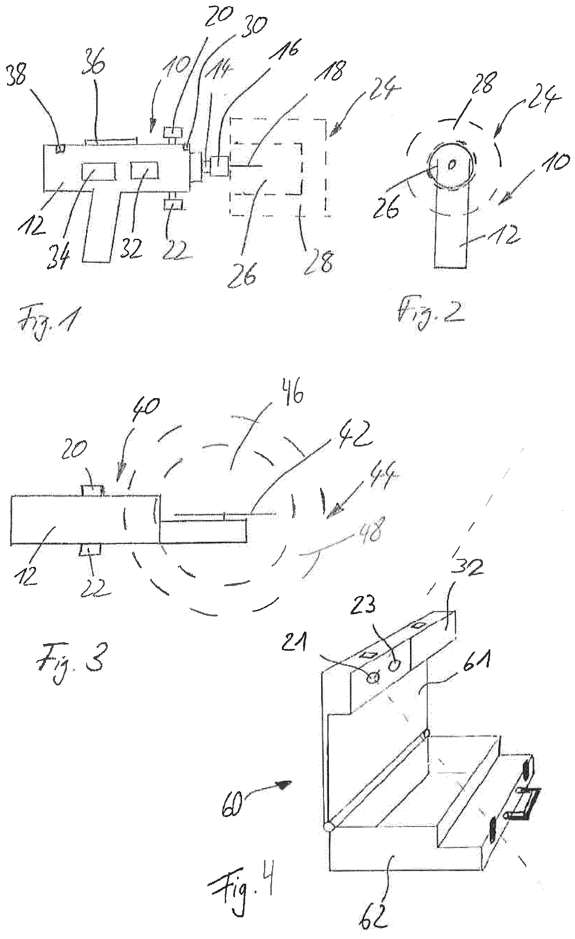

Fig. 1 zeigt ein erfindungsgemäßes handgeführtes Werkzeug 10, das als Handbohrmaschine mit elektromotorischem Antrieb ausgebildet ist. Im Rahmen der Erfindung kann der motorische Antrieb beispielsweise auch als Druckluftmotor, hydraulischer Motor, Verbrennungsmotor oder dergleichen ausgebildet sein.

Die Handbohrmaschine weist ein Gehäuse 12 auf, in dem ein nicht dargestellter Elektromotor angeordnet ist. Eine Antriebswelle 14 führt aus dem Gehäuse heraus zu einem Bohrfutter 16, in dem ein Werkzeugeinsatz 18 in Form eines Spiralbohrers aufgenommen ist.

Mechanisch mit dem Gehäuse der Handbohrmaschine verbunden sind zwei Kameras 20, 22. Die Kameras haben jeweils einen Blickwinkel auf den Werkzeugeinsatz 18. Die erste Kamera 20 ist auf einer Oberseite des Gehäuses angeordnet und die zweite Kamera 22 ist auf einer Unterseite des Gehäuses 12 angeordnet. Die beiden Kameras 20, 22 haben somit einen unterschiedlichen Blickwinkel auf den Werkzeugeinsatz 18, um den herum ein Gefahrenbereich 24 definiert ist. Der Gefahrenbereich 24 ist in Fig. 1 mittels gestrichelter Linien angedeutet und weist einen inneren Gefahrenbereich 26 und einen äußeren Gefahrenbereich 28 auf. Der Gefahrenbereich 24 ist nicht durch mechanische Abgrenzungen oder dergleichen definiert, sondern ist ein vordefinierter Raum um den Werkzeugeinsatz 18 herum. Wenn sich ein menschliches Körperteil in den Gefahrenbereich 24 hineinbewegt, besteht eine Verletzungsgefahr. Je nach Art des Werkzeugeinsatzes 18, beispielsweise auch je nach der Einsatzart des handgeführten Werkzeugs, kann der Gefahrenbereich 24 unterschiedlich nach Größe und Form definiert werden.

Bei der dargestellten Ausführungsform, bei der das handgeführte Werkzeug 10 eine Handbohrmaschine ist und der Werkzeugeinsatz ein Spiralbohrer 18, weist der Gefahrenbereich 24 eine zylindrische Form auf. Eine Mittellängsachse des Zylinders fällt mit der Mittellängsachse des Werkzeugeinsatzes 18 zusammen. Der Gefahrenbereich beginnt an der Vorderseite des Bohrfutters 16 und erstreckt sich über das Ende des Werkzeugeinsatzes 18 hinaus. Beispielsweise weist der Gefahrenbereich 24 einen Radius von 30 cm auf und erstreckt sich vom Ende des Spiralbohrers noch weitere 30 cm weiter. Der Gefahrenbereich kann selbstverständlich auch bereits an der Stelle beginnen, an der die Welle 14 aus dem Gehäuse austritt.

Fig. 2 lässt in der Vorderansicht die zylindrische Form des Gefahrenbereichs 24 erkennen. Der innere Gefahrenbereich 26 weist eine zylindrische Form auf und hat beispielsweise einen Radius von 15 cm und erstreckt sich über das Ende des Spiralbohrers noch etwa 15 cm hinaus.

Der äußere Gefahrenbereich 28 umgibt den inneren Gefahrenbereich 26 teilweise und hat dadurch eine Topfform. Der äußere Gefahrenbereich hat z.B. einen Radius von 30 cm. Die beiden Kameras 20, 22 haben, wie ausgeführt wurde, einen unterschiedlichen Blickwinkel auf den Gefahrenbereich 24 und können dadurch den Gefahrenbereich 24 in seiner räumlichen Ausdehnung zuverlässig erfassen.

An dem Gehäuse 12 der Handbohrmaschine ist ein weiterer Sensor 30 vorgesehen, der beispielsweise als Infrarotsensor oder als berührungslos arbeitender Temperatursensor ausgebildet ist. Ein Erfassungsbereich des Sensors 30 entspricht im Wesentlichen dem Gefahrenbereich 24.

Die von den beiden Kameras 20, 22 erfassten Bilddaten und die Signale des Sensors 30 werden einer Auswerteeinheit 32 im Gehäuse 12 zugeführt. Die Auswerteeinheit ist mit einer Bildverarbeitungssoftware versehen und darüber hinaus auch in der Lage, die Signale des Sensors 30 auszuwerten und zu verarbeiten. Mittels der Bildverarbeitungssoftware in der Auswerteeinheit 32 kann aus den Bilddaten der beiden Kameras 20, 22 ermittelt werden, ob sich ein menschliches Körperteil im Gefahrenbereich 24 befindet. Die Auswertung erfolgt dabei aufgrund der reinen Geometrie, d.h. der Umrisse des menschlichen Körperteils und/oder auf Basis von Farbe, Mustern, beispielsweise Mustern von Fingernägeln oder Venen, auf Basis von Bewegungsmustern oder auf Basis einer vorhergehenden Kalibrierung. Für eine Kalibrierung kann der Bediener des handgeführten Werkzeugs 10 beispielsweise gebeten werden, seine Hand in den Gefahrenbereich 24 zu halten, solange der Antrieb noch nicht läuft, um die Umrisse seiner Hand aus verschiedenen Blickwinkeln erfassen zu können.

Mit dem Sensor 30 kann beispielsweise die Temperatur eines Objekts im Gefahrenbereich 24 erfasst werden. Liegt die Temperatur beispielsweise in einem Bereich zwischen 30 °C und 38 °C, spricht vieles dafür, dass es sich um ein menschliches Körperteil handelt, das aber beispielsweise durch einen Handschuh oder durch ein Kleidungsstück abgedeckt ist. Zusammen mit dem Ergebnis der Bildverarbeitung der Bilddaten der beiden Kameras 20, 22 kann dann zuverlässig festgestellt werden, ob das Objekt im Gefahrenbereich 24 ein Gegenstand oder tatsächlich ein menschliches Körperteil ist.

Im Rahmen der Erfindung ist es ohne weiteres möglich, auch nur mit einer der beiden Kameras 20, 22 zu arbeiten, mit anderen Worten also das handgeführte Werkzeug 10 lediglich mit einer Kamera zu versehen. Es ist im Rahmen der Erfindung darüber hinaus auch möglich, mehr als zwei Kameras und mehr als einen weiteren Sensor 30 einzusetzen. Beispielsweise können Hochfrequenzsensoren und/oder Ultraschallsensoren eingesetzt werden, um zu erkennen, ob Haut im Gefahrenbereich ist. Geeignete Sensoren können beispielsweise auch Kleidung durchdringen, um eine Sicherheit der Detektierung eines menschlichen Körperteils zu erhöhen.

Ergibt die Auswertung und Verarbeitung der Daten von den Kameras 20, 22 und des Sensors 30, dass sich ein menschliches Körperteil im Gefahrenbereich 24 befindet, wird dieses Ergebnis an eine Steuereinheit 34 des handgeführten Werkzeugs 10 weitergegeben. Die Steuereinheit 34 gibt daraufhin entweder ein Warnsignal, beispielsweise ein optisches Warnsignal, an eine Anzeigevorrichtung 36 auf der Oberseite des Gehäuses 34 aus und/oder sie verlangsamt eine Bewegung des Werkzeugeinsatzes 18 oder sie stoppt eine Bewegung des Werkzeugeinsatzes 18 sofort. Die Steuereinheit 34 weist auch einen Speicher zum Speichern der erfassten Daten auf.

Ein Warnsignal wird von der Steuereinheit 34 beispielsweise dann ausgegeben, wenn ein menschliches Körperteil lediglich im äußeren Gefahrenbereich 28 erkannt wird. Zusätzlich zum Ausgeben des Warnsignals kann auch eine Bewegung des Werkzeugeinsatzes 18 verlangsamt werden, indem beispielsweise der Antrieb der Handbohrmaschine verlangsamt wird. Wird mittels der beiden Kameras 20, 22 auch eine Bewegungsrichtung und Bewegungsgeschwindigkeit des menschlichen Körperteils im Gefahrenbereich 24 erfasst, so kann beispielsweise dann, wenn sich das menschliche Körperteil sehr langsam in den äußeren Gefahrenbereich 28 hineinbewegt, lediglich ein Warnsignal ausgegeben werden. Dies gilt auch dann, wenn sich das menschliche Körperteil bereits wieder aus dem äußeren Gefahrenbereich 28 hinausbewegt. Wird dahingegen erkannt, dass sich ein menschliches Körperteil schnell in den Gefahrenbereich 28 hinein- und womöglich auf den Werkzeugeinsatz 18 zubewegt, kann nicht nur das Warnsignal ausgegeben, sondern zusätzlich auch der Antrieb bzw. die Bewegung des Werkzeugeinsatzes 18 verlangsamt werden.

Wird hingegen erkannt, dass ein menschliches Körperteil sich im inneren Gefahrenbereich 26 befindet, wird der Antrieb des handgeführten Werkzeugs 10 bzw. eine Bewegung des Werkzeugeinsatzes 18 sofort gestoppt.

An dem Gehäuse des handgeführten Werkzeugs 10 kann ein Positionssensor 38 vorgesehen sein, beispielsweise ein GPS-Sensor oder ein Sensor zur Bestimmung einer Position des handgeführten Werkzeugs 10 innerhalb eines Gebäudes. Die Daten dieses Positionssensors 38 können ebenfalls der Auswerteeinheit 32 zugeführt werden und gegebenenfalls bei der Auswertung der Bilddaten, beispielsweise mittels einer Bildverarbeitungssoftware, berücksichtigt werden. Die Daten des Positionssensors 38 können aber auch zum Erstellen einer Dokumentation verwendet werden, bspw. wo ein Bohrloch in einer Wand gesetzt wurde. Ergänzend können hierzu Datum, Uhrzeit, Drehzahl, Drehmoment und dergleichen des Werkzeugeinsatzes 18 mit abgespeichert werden sowie auch Erkennungsdaten eines Bedieners.

Die Darstellung der Fig. 3 zeigt in einer Seitenansicht ein weiteres erfindungsgemäßes handgeführtes Werkzeug 40 schematisch in Form eines Einhand-Winkelschleifers. Das Gehäuse 12 des Winkelschleifers ist ebenfalls mit zwei Kameras 20, 22 versehen. Ein Werkzeugeinsatz ist bei dem Einhand-Winkelschleifer als Schleifscheibe 42 ausgebildet. Ein Gefahrenbereich 44 ist bei der dargestellten Ausführungsform kugelförmig und weist beispielsweise einen Radius von 30 cm auf. Ein Ursprung des Radius des kugelförmigen Gefahrenbereichs 44 liegt beispielsweise am Mittelpunkt der Schleifscheibe 42. Der Gefahrenbereich 44 weist einen inneren, ebenfalls kugelförmigen Gefahrenbereich 46 und einen äußeren, kugelschalenförmigen Gefahrenbereich 48 auf.

Im Übrigen erfolgt eine Überwachung des Gefahrenbereichs 44 des handgeführten Werkzeugs 40 in gleicher Weise wie dies anhand der Fig. 1 und 2 bereits erläutert wurde.

Zusätzlich zu Drehzahl, Drehmoment, Datum, Uhrzeit der Schleifscheibe 42 kann beispielsweise auch noch ein Füllstand eines gegebenenfalls vorhandenen Akkumulators des handgeführten Werkzeugs 40 erfasst werden.

Die Kameras 20, 22 können mechanisch mit dem handgeführten Werkzeug 10, 40 verbunden sein, wobei dann die mit diesem handgeführten Werkzeug 10, 40 durchgeführten Arbeitsschritte mit der Kamera 20, 22 erfasst und die Gefahrenbereiche 24, 44 überwacht werden. Die Kameras 20, 22 können jedoch auch nicht mit dem handgeführten Werkzeug 10, 40 verbunden sein, sondern gesondert von dem handgeführten Werkzeug 10, 40 positioniert sein.

Fig. 4 zeigt einen Koffer 60 mit einem klappbaren oder abnehmbaren Deckel 61 und einem Kofferhauptkörper 62 für ein handgeführtes Werkzeug 10, 40, wie es in den Fig. 1 bis 3 gezeigt ist, oder ein weiteres nicht dargestelltes handgeführtes Werkzeug ohne Kamera. An dem Koffer 60 kann zumindest eine weitere Kamera 21, 23 vorgesehen sein und zwar gesondert und losgelöst von dem handgeführten Werkzeug 10, 40. Die Kamera 21, 23 ist an dem Deckel 61 des Koffers 60 angeordnet und so positioniert, dass sie die mit dem handgeführten Werkzeug 10, 40 oder dem nicht dargestellten handgeführten Werkzeug ohne Kamera durchgeführten Arbeitsschritte erfasst sowie die Gefahrenbereiche 24, 44 überwacht. Dazu ist der Koffer 60 einer Stelle an der die Arbeitsschritte mit dem handgeführten Werkzeug 10, 40 oder dem nicht dargestellten handgeführten Werkzeug ohne Kamera ausgeführt werden, zu positionieren. Die Kamera 21, 23 erfasst dann die durchgeführten Arbeitsschritte und mittels der Bildverarbeitungssoftware ist der Gefahrenbereich 24, 44 um den Werkzeugeinsatz 18 oder um die Schleifscheibe 42 oder ein weiteres geeignetes Werkzeug aufgespannt und wird überwacht. Die Auswerteeinheit 32 ist neben der Kamera 21, 23 in dem Deckel 61 angeordnet, kann aber auch an einem anderen Ort in dem oder an dem Koffer 60 angeordnet sein. Im Rahmen der Erfindung kann die Auswerteeinheit 32 und können mehrere Kameras 21, 23 auch unabhängig von einem Werkzeugkoffer angeordnet sein und geeignet positioniert werden.

Zwischen dem handgeführten Werkzeug 10, 40 oder dem nicht dargestellten handgeführten Werkzeug ohne Kamera und der Auswerteeinheit 32 besteht eine Kommunikationsverbindung, die insbesondere drahtlos ausgeführt ist. Die Kamera 21, 23 wird bei Betätigung des handgeführten Werkzeugs 10, 40 oder des handgeführten Werkzeugs ohne Kamera 20, 22 aktiviert, um den Gefahrenbereich zu überwachen und im Gefahrenfall, wenn sich beispielsweise ein menschliches Körperteil im Gefahrenbereich befindet, ein Warnsignal zu erzeugen und/oder einen Antrieb des handgeführten Werkzeugs zu verlangsamen und/oder den Antrieb des handgeführten Werkzeugs zu stoppen.

In einer nicht dargestellten Ausgestaltung ist eine vorgeschaltete und/oder nachgeschaltete Überwachung des Gefahrenbereichs 24, 44 vorgesehen. Diesbezüglich ist das handgeführte Werkzeug noch nicht oder nicht mehr im Betrieb und somit ausgeschaltet. Ist beispielsweise ein scharfkantiger Werkzeugeinsatz oder ein noch heißer und noch nicht abgekühlter Werkzeugeinsatz in dem handgeführten Werkzeug 10, 40 vorgesehen, so ertönt beispielsweise ein Gefahrensignal oder Warnsignal, sobald sich ein menschliches Körperteil im Gefahrenbereich 24, 44 befindet.

Situationsabhängig kann die Kamera 20, 22 und/oder die Kamera 21, 23 den Gefahrenbereich 24, 44 überwachen.

## Patentansprüche

1. Verfahren zur Gefahrenabschaltung von handgeführten Werkzeugen (10; 40) mit einem Antrieb, wobei das handgeführte Werkzeug (10; 40) mit wenigstens einer Kamera (20, 22) insbesondere mechanisch verbunden ist und die Kamera (20, 22) und/oder das Werkzeug (10; 40) mit einer Auswerteeinheit (32) mit einer Bildverarbeitungssoftware versehen ist, **gekennzeichnet durch** die Schritte: Aktivieren der Kamera (20, 22), Erfassen eines vordefinierten Gefahrenbereichs (24; 44) des handgeführten Werkzeugs mittels der Kamera (20, 22), Verarbeiten und Auswerten der erfassten Bilddaten mittels der Auswerteeinheit (32) und der Bildverarbeitungssoftware hinsichtlich des Vorhandenseins eines menschlichen Körperteils in dem Gefahrenbereich (24; 44) sowie Erzeugen eines Warnsignals und/oder Verlangsamen des Antriebs des handgeführten Werkzeugs (10; 40) und/oder Stoppen des Antriebs des handgeführten Werkzeugs (10; 40) beim Vorhandensein eines menschlichen Körperteils im Gefahrenbereich.

2. Verfahren nach Anspruch 1, **gekennzeichnet durch** Erfassen und Verarbeiten von Signalen wenigstens eines weiteren Sensors (30, 38) an oder in dem handgeführten Werkzeug (10; 40) mittels der Auswerteeinheit (32) und Berücksichtigen der Signale des wenigstens einen weiteren Sensors (30, 38) beim Auswerten der erfassten Bilddaten hinsichtlich des Vorhandenseins eines menschlichen Körperteils in dem Gefahrenbereich.

3. Verfahren nach Anspruch 2, **gekennzeichnet durch** Erfassen und Verarbeiten von Signalen eines Infrarotsensors, eines mit hochfrequenter elektromagnetischer Strahlung arbeitenden Sensors, eines Ultraschallsensors, eines Temperatursensors, eines kapazitiven Sensors und/oder eines Positionssensors zum Erfassen einer Position des handgeführten Werkzeugs (10; 40) im Raum.

4. Verfahren nach einem der vorstehenden Ansprüche, **gekennzeichnet durch** Erfassen des Gefahrenbereichs mit wenigstens zwei mit unterschiedlichem Blickwinkel auf den Gefahrenbereich angeordneten Kameras (20, 22), insbesondere 3-D-Kameras, und Verarbeiten und Auswerten der Daten der wenigstens zwei Kameras (20, 22) mittels der Auswerteeinheit (32) und der Bildverarbeitungssoftware.

5. Verfahren nach einem der vorstehenden Ansprüche, **gekennzeichnet durch** Aktivieren der Kamera mittels Bewegen des handgeführten Werkzeugs (10; 40) und/oder Einschalten eines Antriebs des handgeführten Werkzeugs.

6. Verfahren nach wenigstens einem der vorstehenden Ansprüche, **gekennzeichnet durch** Aktivieren der Kamera (20, 22) mittels Ausklappen der Kamera (20, 22).

7. Verfahren nach wenigstens einem der vorstehenden Ansprüche, **gekennzeichnet durch** Definieren eines Gefahrenbereichs in Form einer gedachten Kugel, in deren Zentrum insbesondere ein Werkzeugeinsatz des handgeführten Werkzeugs angeordnet ist, oder in Form eines gedachten Zylinders, auf dessen Mittellängsachse insbesondere ein Werkzeugeinsatz des handgeführten Werkzeugs angeordnet ist.

8. Verfahren nach wenigstens einem der vorstehenden Ansprüche, **gekennzeichnet durch** Unterteilen des Gefahrenbereichs in einen inneren Gefahrenbereich und einen äußeren Gefahrenbereich (24; 44) und Erzeugen eines Warnsignals und/oder Verlangsamen des Antriebs beim Vorhandensein eines menschlichen Körperteils in dem äußeren Gefahrenbereich (24; 44) und Stoppen des Antriebs des handgeführten Werkzeugs beim Vorhandensein eines menschlichen Körperteils in dem inneren Gefahrenbereich (26; 46).

9. Verfahren nach wenigstens einem der vorstehenden Ansprüche, **gekennzeichnet durch** Erstellen einer Dokumentation von mit dem handgeführten Werkzeug (10; 40) durchgeführten Arbeitsschritten anhand der mittels der wenigstens einen Kamera (20, 22) erfassten Bilddaten.

10. Verfahren nach Anspruch 9, **gekennzeichnet durch** Berücksichtigen von Daten wenigstens eines weiteren Sensors (30, 38), insbesondere eines Positionssensors zum Erfassen einer Position des handgeführten Werkzeugs im Raum, von Daten des handgeführten Werkzeugs, insbesondere Gerätenummer, Drehzahl, Drehmoment, Art und Abmessungen eines Werkzeugeinsatzes des handgeführten Werkzeugs, und/oder von Daten eines Bedieners des handgeführten Werkzeugs beim Erstellen der Dokumentation.

11. Handgeführtes Werkzeug (10; 40) mit einem Antrieb, **gekennzeichnet durch** wenigstens eine insbesondere mechanisch mit dem handgeführten Werkzeug (10; 40) verbundene Kamera (20, 22) zum Erfassen eines vordefinierten Gefahrenbereichs des handgeführten Werkzeugs (10; 40), eine Auswerteeinheit (32) mit einer Bildverarbeitungssoftware zum Verarbeiten und Auswerten der erfassten Bilddaten mittels der Auswerteeinheit (32) und der Bildverarbeitungssoftware hinsichtlich des Vorhandenseins eines menschlichen Körperteils in dem Gefahrenbereich und eine Steuereinheit (34) zum Erzeugen eines Warnsignals und/oder zum Verlangsamen eines Antriebs des handgeführten Werkzeugs (10; 40) und/oder zum Stoppen des Antriebs des handgeführten Werkzeugs (10; 40) beim Vorhandensein eines menschlichen Körperteils im Gefahrenbereich(24; 44).

12. Handgeführtes Werkzeug nach Anspruch 11, **gekennzeichnet durch** wenigstens einen weiteren Sensor (30, 38), insbesondere eines Infrarotsensors, eines mit hochfrequenter elektromagnetischer Strahlung arbeitenden Sensors, eines Ultraschallsensors und/oder eines Positionssensors zum Erfassen einer Position des handgeführten Werkzeugs im Raum, und Mitteln zum Weiterleiten der Signale des wenigstens einen weiteren Sensors (30, 38) zu der Auswerteinheit (32).

13. Handgeführtes Werkzeug nach Anspruch 11 oder 12, **gekennzeichnet durch** einen Speicher zum Speichern von Daten und eine Schnittstelle zum Auslesen von Daten.

14. Anordnung mit einem handgeführten Werkzeug (10; 40) gemäß mindestens einem der Ansprüche 11 bis 13 und zumindest einer separaten Kamera (21, 23), wobei zwischen dem handgeführten Werkzeug (10, 40) und der zumindest einen separaten Kamera (21, 23) eine Kommunikationsverbindung besteht und die zumindest eine separate Kamera (21, 23) einen Gefahrenbereich (24; 44) des handgeführten Werkzeugs (10; 40) überwacht.

15. Anordnung nach Anspruch 14, **gekennzeichnet durch** einen Koffer (60) für das handgeführte Werkzeug (10; 40), in dem die zumindest eine separate Kamera (21, 23) angeordnet ist, wobei der Koffer (60) so positioniert ist, dass der Gefahrenbereich (24; 44) des handgeführten Werkzeugs (10; 40) überwachbar ist.
